# EUROPEAN PATENT SPECIFICATION

(11) **EP 2 927 719 B1**
(45) Date of publication and mention of the grant of the patent: **17.01.2018**
(21) Application number: 14162559.0
(22) Date of filing: 31.03.2014
(51) Int. Cl.: G02B 6/38

(54) **Optical fiber connector assembly**
Glasfasersteckeranordnung
Ensemble de connecteur de fibres optiques

(43) Date of publication of application: 07.10.2015
(73) Proprietor: Gloriole Electroptic Technology Corp., Kaohsiung City 80672 (TW)
(72) Inventor: Lin, Jim, 80672 Kaohsiung City (TW)
(74) Representative: Regimbeau

(56) References cited:
- EP-A1- 2 423 721
- WO-A1-00/31575
- US-A1- 2002 150 350
- US-A1- 2002 181 888
- US-A1- 2009 290 838
- US-A1- 2014 044 394
- US-A1- 2014 060 927

## Description

The invention relates to an optical fiber connector, more particularly to an optical fiber connector assembly including an optical fiber connector.

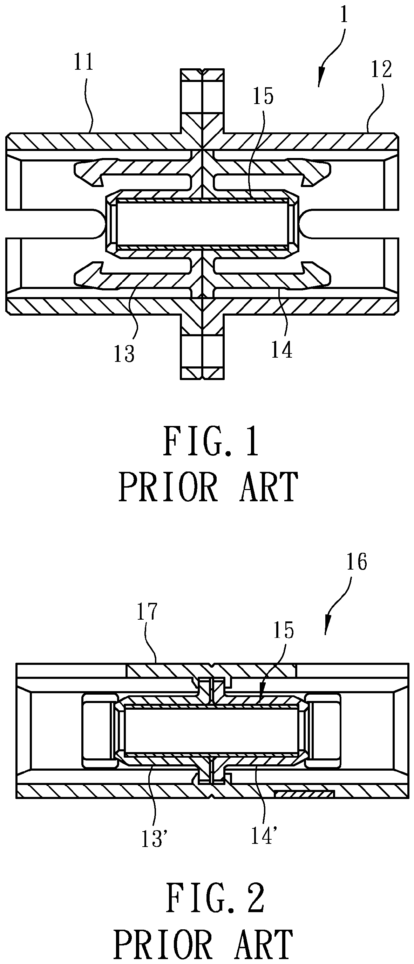

Referring to Fig. 1, a conventional optical fiber connector 1 includes interconnected first and second housing halves 11, 12, first and second holding members 13, 14 mated with each other and mounted respectively in the first and second housing halves 11, 12, and a sleeve 15 fitted into the first and second holding members 13, 14.

In assembling the conventional optical fiber connector 1, the sleeve 15 is inserted into the first and second holding members 13, 14, followed by inserting the first and second holding members 13, 14 respectively into the first and second housing halves 11, 12. Subsequently, the first and second housing halves 11, 12 are mated and welded together through high frequency welding techniques.

However, the welding temperature is relatively high and may result in deformation of or even damage to the first and second housing halves 11, 12, which, in turn, results in adverse effect on the optical and mechanical properties of the conventional optical fiber connector 1. Moreover, high frequency welding techniques is costly, and may generate smoke with toxic particles.

Referring to Fig. 2, Taiwanese Patent Application Publication No. 200817741 (Application No. 095136498) discloses another conventional optical fiber connector 16 that includes a monolithic housing 17 for substitution of the welded first and second housing halves 11, 12 as illustrated in Fig. 1 to lower the manufacturing cost and avoid generation of the harmful particles.

However, insertion of the first and second holding members 13' , 14' into the housing 17 needs to be forced. As a result, the assembly of the conventional optical fiber connector 16 is laborious, and may cause fracture of the housing 17 and the first and second holding members 13', 14'.

Document US 2014/044394 describes an optical fiber connector including a connector housing and a positioning unit. The connector housing has two opposite side walls, a base wall disposed between and interconnecting the side walls, and a lid disposed between and inter-engaging releasably the side walls. The connector housing defines an inner space, and an access opening in spatial communication with the inner space and covered by the lid. The positioning unit is mounted in the inner space and includes first and second holding members and a coupling sleeve extending into and interconnecting the first and second holding members . The positioning unit is inserted into the inner space through the access opening so as to be mounted in the inner space before covering the access opening with the lid.

Therefore, the object of the present invention is to provide an optical fiber connector assembly that can overcome the aforesaid drawbacks associated with the prior arts.

Accordingly, an optical fiber connector assembly of the present invention includes a connector housing, a positioning unit, an outer shell, a positioning member and a fastening unit. The connector housing has two side walls that are opposite to each other in a first direction, a base wall that is disposed between and interconnects the side walls, and a lid that is disposed oppositely of the base wall in a second direction transverse to the first direction, and that is disposed between and inter-engages releasably the side walls. The base wall and the side walls cooperatively define an inner space and an access opening that is in spatial communication with the inner space and that is covered and closed by the lid. The positioning unit includes first and second holding members, and a coupling sleeve that extends into and interconnects the first and second holding members. The positioning unit is inserted into the inner space through the access opening so as to be mounted in the inner space before covering the access opening with the lid. The outer shell has a hollow shell body and an outer flange. The shell body has an inner surrounding surface defining a shell space therein, an outer surrounding surface opposite to the inner surrounding surface, and first and second end openings opposite to each other in a third direction transverse to the first and second directions and in spatial communication with the shell space. The connector housing is received in the shell space. The outer flange extends outwardly from the outer surrounding surface. The outer surrounding surface is formed with a first outer thread and a second outer thread that are disposed at opposite sides of the outer flange in the third direction. The positioning member is disposed adjacent to the first end opening, and engages releasably the outer shell. The fastening unit includes a positioning ring that is capable of engaging threadedly one of the first outer thread and the second outer thread of the outer shell, and an elastic ring that is disposed between the positioning ring and the outer flange of the outer shell, and that is pressed by the positioning ring against the outer flange.

Other features and advantages of the present invention will become apparent in the following detailed description of the preferred embodiment with reference to the accompanying drawings, of which:
Fig. 1 is a sectional view of a conventional optical fiber connector;
Fig. 2 is a sectional view of another conventional optical fiber connector disclosed in Taiwanese Patent Application Publication No. 200817741;
Fig. 3 is an exploded perspective view of a preferred embodiment of an optical fiber connector assembly according to the invention;
Fig. 4 is an exploded perspective view of a connector housing and a positioning unit of the preferred embodiment;
Fig. 5 is a sectional view of the connector housing and the positioning unit of the preferred embodiment;
Fig. 6 is a sectional view of the preferred embodiment;
Fig. 7 is another sectional view of the preferred embodiment;
Fig. 8 is a schematic sectional view illustrating the preferred embodiment being mounted to a support wall and connected to an optical fiber line with a dust-preventing unit being removed; and
Fig. 9 is a view similar to Fig. 8, but illustrating the preferred embodiment being mounted to the support wall in a different manner.

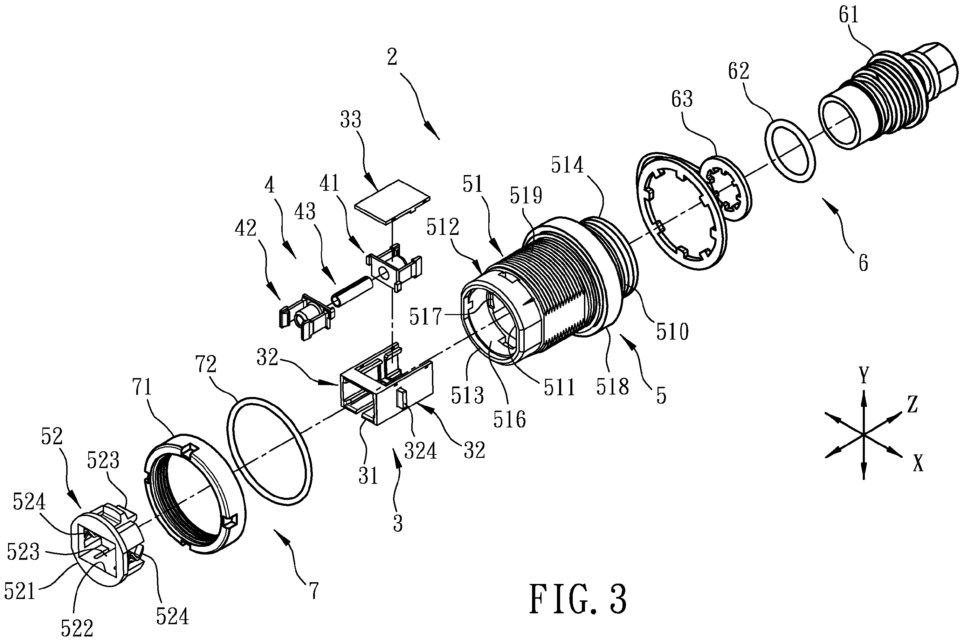

As shown in Fig. 3, a preferred embodiment of an optical fiber connector assembly 2 according to the present invention includes a connector housing 3, a positioning unit 4, an outer shell 5, a positioning member 52, a dust-preventing unit 6 and a fastening unit 7.

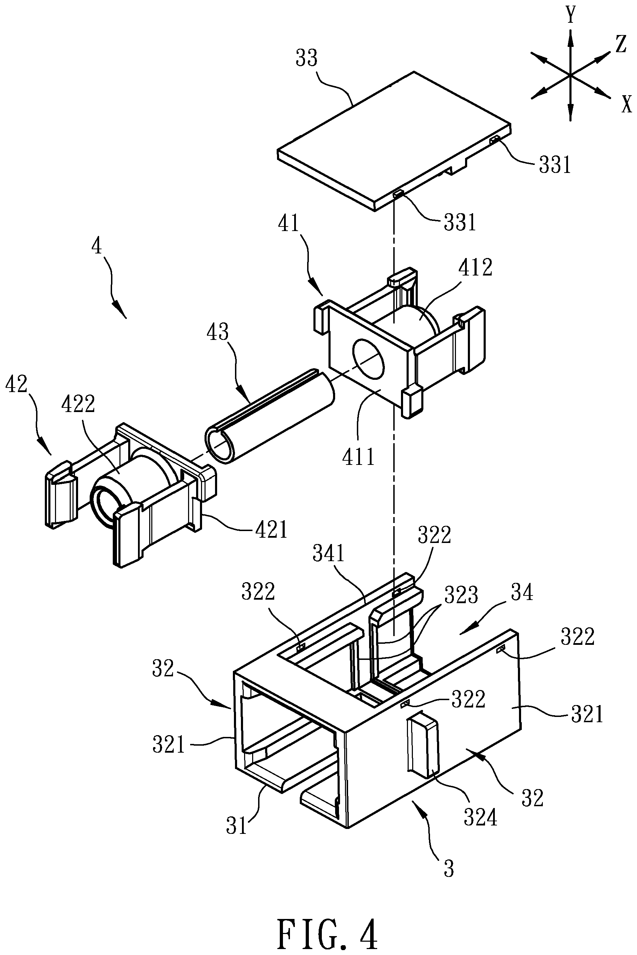

Referring to Fig. 4, the connector housing 3 has two side walls 32 that are opposite to each other in a first direction (X), a base wall 31 that is disposed between and that interconnects the side walls 32, and a lid 33 that is disposed oppositely of the base wall 31 in a second direction (Y) transverse to the first direction (X), and that is disposed between and inter-engages releasably the side walls 32. The base wall 31 and the side walls 32 are formed as one piece, and cooperatively define an inner space 34 and an access opening 341 that is in spatial communication with the inner space 34 and that is covered and closed by the lid 33. Each of the side walls 32 has a wall body 321, an outer protrusion 324 (only one outer protrusion 324 of one of the side walls 32 is visible) protruding outwardly from the wall body 321, a plurality of through-holes 322 formed in the wall body 321, and a pair of limiting bars 323 (only a pair of the limiting bars 323 of one of the side walls 32 are visible) protruding from the wall body 321 and into the inner space 34, extending in the second direction (Y), and spaced apart from each other in a third direction (Z) transverse to the first and second directions (X, Y). The lid 33 is formed with a plurality of tongues 331 extending into and engaging detachably the through-holes 322 in the wall bodies 321 of the side walls 32, respectively, so as to be detachably mounted to the side walls 32.

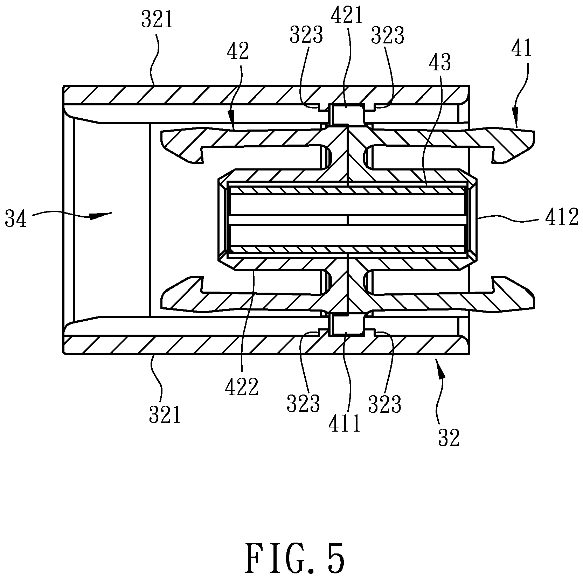

Referring to Figs. 4 and 5, the positioning unit 4 includes first and second holding members 41, 42, and a coupling sleeve 43 extending into and interconnecting the first and second holding members 41, 42. The positioning unit 4 is inserted into the inner space 34 through the access opening 341 so as to be mounted in the inner space 34 before covering the access opening 341 with the lid 33.

Each of the first and second holding members 41, 42 has a mating plate 411, 421 and a tubular part 412, 422 extending from the mating plate 411, 412 and away from the other one of the first and second holding members 41, 42 in the third direction (Z). The mating plates 411, 421 mate with and contact each other, and are limited by the limiting bars 323 of the side walls 32, such that the first and second holding members 41, 42 are substantially prevented from moving in the connector housing 3 in the third direction (Z) . The coupling sleeve 43 extends into the tubular parts 412, 422 of the first and second holding members 41, 42.

Referring back to Fig. 3, the outer shell 5 has a hollow shell body 51 that has an inner surrounding surface 511 defining a shell space 516 therein, and an outer surrounding surface 512 opposite to the inner surrounding surface 511. The connector housing 3 is received in the shell space 516. The shell body 51 further has first and second end openings 513, 514 that are opposite to each other in the third direction (Z) and that are in spatial communication with the shell space 516, two stepped shoulders 517 (only one is visible in Fig. 3) that are formed in the inner surface 511, that are opposite to each other in the first direction (X) and that are disposed adjacent to the first end opening 513. The outer shell 5 further has an outer flange 518 that extends outwardly from the outer surrounding surface 512 of the shell body 51.

The outer surrounding surface 512 is formed with a first outer thread 519 and a second outer thread 510. The first outer thread 519 is disposed between the first end opening 513 and the outer flange 518. The second outer thread 510 is disposed between the second end opening 514 and the outer flange 518.

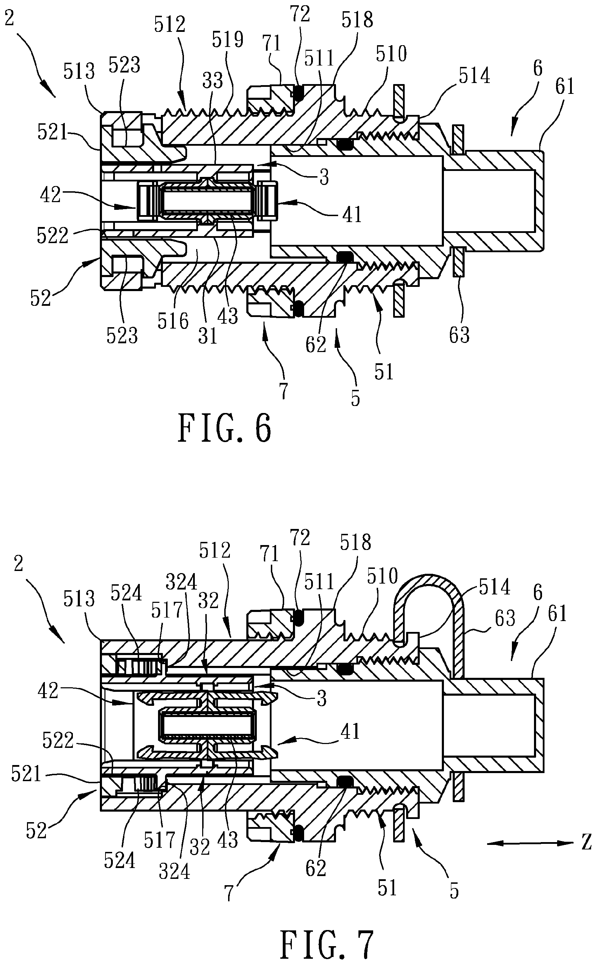

Referring further to Figs. 6 and 7, in this embodiment, the positioning member 52 is coupled to the outer shell 5 in a snap-fit manner to be received in the shell space 516, is disposed adjacent to the first end opening 513 of the outer shell 5, and has a loop-shaped portion 521 that defines an inlet opening 522 and that is fittingly sleeved on the connector housing 3, two opposite resilient arms 523, and two resilient legs 524. The resilient arms 523 extend from the loop-shaped portion 521 in the third direction (Z) into the shell space 516, and engage releasably and resiliently the shell body 51 of the outer shell 5. Each of the resilient legs 524 has a plurality of pleated portions so as to be resilient in the third direction (Z) . The resilient legs 524 extend from the loop-shaped portion 521 in the third direction (Z) to urge resiliently the outer protrusions 324 (only one is visible in Fig. 3) of the side walls 32 to abut against the stepped shoulders 517, respectively, to thereby position the connector housing 3 in the shell space 516.

The dust-preventing unit 6 includes a cap member 61, a cap-connecting member 63 and an elastic sealing ring 62. The cap member 61 engages threadedly and releasably the shell body 51 of the outer shell 5 for covering the second end opening 514 and for preventing dust and moisture from entering into the shell space 516 of the outer shell 5 and the inner space 34 of the connector housing 3. The elastic sealing ring 62 is sleeved on the cap member 61 and abuts sealingly against the cap member 61 and the inner surrounding surface 511 of the shell body 51. The cap-connecting member 63 has a first ring sleeved removably around the shell body 51, a second ring sleeved around the cap member 61, and a flexible string interconnecting the first and second rings so that the dust-preventing unit 6 can remain on the outer shell 51 when the cap member 61 is disengaged from the outer shell 51.

The fastening unit 7 includes a positioning ring 71 and an elastic ring 72. The elastic ring 72 is disposed between the positioning ring 71 and the outer flange 518 of the outer shell 5. The positioning ring 71 is capable of engaging threadedly one of the first outer thread 519 and the second outer thread 510 of the shell body 51 for providing a force to press the elastic ring 72 against the outer flange 518.

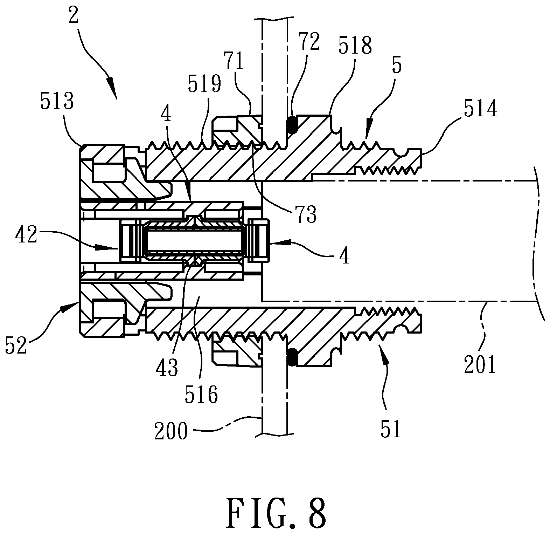

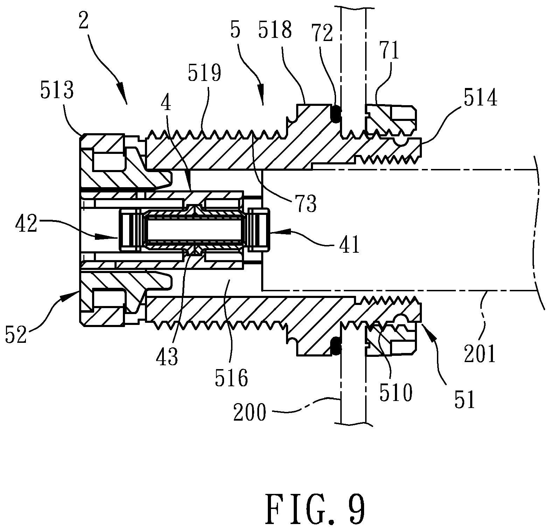

Referring to Figs. 8 and 9, in use, the positioning ring 71 is first removed from the outer shell 5, followed by attaching the outer shell 5 to a support wall 200 of a machine with one of the first outer thread 519 and the second outer thread 510 extending through the support wall 200, with the first and second end openings 513, 514 being respectively disposed inside and outside the machine, and with the elastic ring 72 being clamped between the support wall 200 and the outer flange 518 of the outer shell 51. Then, the positioning ring 71 is fastened to the one of the first outer thread 519 and the second outer thread 510 of the outer shell 51 so as to tightly clamp the support wall 200 and the elastic ring 72 between the positioning ring 71 and the outer flange 518. Subsequently, the cap member 61 (see Fig. 3) is disengaged from the outer shell 51 to open the second end opening 514, and an optical fiber line 201 is inserted through the second end opening 514 into the shell space 516 to be coupled to the positioning unit 4. Referring to Fig. 9, it is noted that the dust-preventing unit 6 (see Fig. 3) must be removed from the outer shell 51 before extension of the second outer thread 510 through the support wall 200. With the inclusion of the connector housing 3 having the access opening 341 and the lid 33 covering the access opening 341, in the optical fiber connector 2 of this invention, the aforesaid drawback associated with the prior arts can be eliminated. Moreover, since the outer shell 51 and the positioning member 52 are coupled in a snap-fit manner, it is easy to replace the positioning member 52 with another one that has an inlet opening 522 of different shapes and sizes.

## Claims

1. An optical fiber connector assembly (2) comprising:
a connector housing (3) having
two side walls (32) that are opposite to each other in a first direction (X),
a base wall (31) that is disposed between and that interconnects said side walls (32), and
a lid (33) that is disposed oppositely of said base wall (31) in a second direction (Y) transverse to the first direction (X), and that is disposed between and inter-engages releasably said side walls (32), said base wall (31) and said side walls (32) cooperatively defining an inner space (34) and an access opening (341) that is in spatial communication with said inner space (34) and that is covered and closed by said lid (33);
a positioning unit (4) including
first and second holding members (41, 42), and
a coupling sleeve (43) that extends into and interconnects said first and second holding members (41, 42), said positioning unit (4) being inserted into said inner space (34) through said access opening (341) so as to be mounted in said inner space (34) before covering said access opening (341) with said lid (33);
an outer shell (5) having
a hollow shell body (51) that has an inner surrounding surface (511) defining a shell space (516) therein, an outer surrounding surface (512) opposite to said inner surrounding surface (511), and first and second end openings (513, 514) opposite to each other in a third direction (Z) transverse to the first and second directions (X, Y) and in spatial communication with said shell space (516), said connector housing (3) being received in said shell space (516), and
an outer flange (518) that extends outwardly from said outer surrounding surface (512) of said shell body (51);
a positioning member (52) disposed adjacent to said first end opening (513), and engaging releasably said outer shell (5); and
a fastening unit (7) including an elastic ring (72) and a positioning ring (71), said elastic ring (72) being disposed between said positioning ring (71) and said outer flange (518) of said outer shell (51), and that is pressed by said positioning ring (71) against said outer flange (518),
the optical fiber connector assembly (2) being **characterized in that**:
said outer surrounding surface (512) is formed with a first outer thread (519) and a second outer thread (510) that are disposed at opposite sides of said outer flange (518) in the third direction (Z), and said positioning ring (71) is capable of engaging threadedly one of said first outer thread (519) and said second outer thread (510) of said outer shell (5).

2. The optical fiber connector assembly (2) as claimed in claim 1, **characterized in that** said first outer thread (519) is disposed between said first end opening (513) and said outer flange (518), and said second outer thread (510) is disposed between said second end opening (514) and said outer flange (518).

3. The optical fiber connector assembly (2) as claimed in any one of claims 1 and 2, **characterized in that** said positioning member (52) has
a loop-shaped portion (521) that defines an inlet opening (522) and that is fittingly sleeved on said connector housing (3),
a plurality of resilient arms (523) that extend from said loop-shaped portion (521) in the third direction (Z) into said shell space (516), and that engage releasably and resiliently said shell body (51) of said outer shell (5), and
a plurality resilient legs (524) that extend from said loop-shaped portion (521) in the third direction (Z) to urge resiliently said connector housing (3) to abut against said shell body (51), thereby positioning said connector housing (3) in said shell space (516).

4. The optical fiber connector assembly (2) as claimed in claim 3, further **characterized in that**:
said base wall (31) and said side walls (32) of said connector housing (3) are formed as one piece, each of said side walls (32) having a wall body (321), an outer protrusion (324) protruding outwardly from said wall body (321), and a plurality of through-holes (322) formed in said wall body (321);
said lid (33) is formed with a plurality of tongues (331) that extend into and engage said through-holes (322) in said wall bodies (321) of said side walls (32), respectively;
said shell body (51) of said outer shell (5) further has two stepped shoulders (517) that are formed in said inner surrounding surface (511); and
saidpositioningmember (52) has two of said resilient legs (524), said resilient legs (524) urging resiliently said outer protrusions (324) of said side walls (32) to abut against said stepped shoulders (517), respectively, to thereby position said connector housing (3) in said shell space (516).

5. The optical fiber connector assembly (2) as claimed in any one of claims 1 to 4, **characterized by** a dust-preventing unit (6) including
a cap member (61) that engages releasably said shell body (51) of said outer shell (5) for covering said second end opening (514), and
an elastic sealing ring (62) that is sleeved on said cap member (61) and that abuts sealingly against said cap member (61) and said inner surface (511) of said shell body (51).

6. The optical fiber connector assembly (2) as claimed in claim 5, further **characterized in that** said dust-preventing unit (6) further includes a cap-connecting member (63) sleeved removably on said shell body (51) and interconnecting said outer shell (51) and said cap member (61).

7. The optical fiber connector assembly (2) as claimed in claim 4, further **characterized in that**:
each of said side walls (32) further has a pair of limiting bars (323) that protrude from said wall body (321) and into said inner space (34), that extend in the second direction (Y), and that are spaced apart from each other in the third direction (Z); and
each of said first and second holding members (41, 42) has a mating plate (411, 421) and a tubular part (412, 422) extending from said mating plate (411, 412) and away from the other one of said first and second holding members (41, 42) in the third direction (Z), said mating plates (411, 421) mating with and contacting each other, and being limited by said limiting bars (323) of said side walls (32), such that said first and second holding members (41, 42) are substantially prevented from moving in said connector housing (3) in the third direction (Z), said coupling sleeve (43) extending into said tubular parts (412, 422) of said first and second holding members (41, 42).

## Patentansprüche

1. Lichtwellenleiter-Verbinderanordnung (2), aufweisend:
ein Verbindergehäuse (3), aufweisend
zwei Seitenwände (32), die einander in einer ersten Richtung (X) gegenüberliegen,
eine Basiswand (31), die dazwischen angeordnet ist und die die Seitenwände (32) miteinander verbindet, und
einen Deckel (33), der gegenüber der Basiswand (31) in einer zweiten Richtung (Y) quer zur ersten Richtung (X) angeordnet ist, und der lösbar eingreifend zwischen den Seitenwänden (32) angeordnet ist, und die Basiswand (31) und die Seitenwände (32) zusammenwirkend einen Innenraum (34) und eine mit dem Innenraum (34) in räumlicher Verbindung stehende und durch den Deckel (33) abgedeckte und verschlossene Zugangsöffnung (341) definieren;
eine Positionierungseinheit (4), aufweisend :
erste und zweite Halteelemente (41, 42) und
eine sich in die ersten und zweiten Halteelemente (41, 42) erstreckende und diese miteinander verbindende Kupplungshülse (43), wobei die Positionierungseinheit (4) durch die Zugangsöffnung (341) in den Innenraum (34) eingesetzt ist, um im Innenraum (34) montiert zu werden, bevor die Zugangsöffnung (341) mit dem Deckel (33) abgedeckt wird;
eine Außenschale (5), aufweisend :
einen hohlen Schalenkörper (51) mit einer inneren umgebenden, einen Schalenraum (516) darin definierenden Oberfläche (511), einer äußeren umgebenden Oberfläche (512) gegenüber der inneren umgebenden Oberfläche (511), und mit ersten und zweiten Endöffnungen (513, 514) einander gegenüberliegend in einer dritten Richtung (Z) quer zu den ersten und zweiten Richtungen (X, Y) und in räumlicher Verbindung mit dem Schalenraum (516), wobei das Verbindergehäuse (3) im Schalenraum (516) aufgenommen ist, und
einen Außenflansch (518), der sich von der äußeren umgebenden Oberfläche (512) des Schalenkörpers (51) nach außen erstreckt;
ein Positionierungselement (52), das angrenzend an die erste Endöffnung (513) angeordnet ist und mit der Außenschale (5) lösbar in Eingriff steht; und
eine Befestigungseinheit (7), aufweisend einen elastischen Ring (72) und einen Positionierungsring (71),
wobei der elastische Ring (72) zwischen dem Positionierungsring (71) und dem Außenflansch (518) der Außenschale (51) angeordnet ist und durch den Positionierungsring (71) gegen den Außenflansch (518) gedrückt wird,
wobei die Lichtwellenleiter-Verbinderanordnung (2) **dadurch gekennzeichnet ist, dass**:
die äußere umgebende Oberfläche (512) mit einem ersten Außengewinde (519) und einem zweiten Außengewinde (510) ausgebildet ist, die auf gegenüberliegenden Seiten des Außenflansches (518) in der dritten Richtung (Z) angeordnet sind, und
der Positionierungsring (71) mit einem vom ersten Außengewinde (519) und zweiten Außengewinde (510) der Außenschale (5) in Gewindeeingriff gebracht werden kann.

2. Lichtwellenleiter-Verbinderanordnung (2) nach Anspruch 1, **dadurch gekennzeichnet, dass** das erste Außengewinde (519) zwischen der ersten Endöffnung (513) und dem Außenflansch (518) angeordnet ist und das zweite Außengewinde (510) zwischen der zweiten Endöffnung (514) und dem äußeren Flansch (518) angeordnet ist.

3. Lichtwellenleiter-Verbinderanordnung (2) nach einem der Ansprüche 1 und 2, **dadurch gekennzeichnet, dass** das Positionierungselement (52) Folgendes aufweist:
einen schlaufenförmigen Abschnitt (521), der eine Einlassöffnung (522) definiert und der auf dem Verbindergehäuse (3) passend umhüllt ist,
mehrere elastische Arme (523), die sich vom schlaufenförmigen Abschnitt (521) in der dritten Richtung (Z) in den Schalenraum (516) erstrecken, und die lösbar und elastisch mit dem Schalenkörper (51) der Außenschale (5) im Eingriff sind, und
mehrere elastische Schenkel (524), die sich vom schleifenförmigen Abschnitt (521) in der dritten Richtung (Z) erstrecken, um das Verbindergehäuse (3) elastisch zum Anliegen gegen den Schalenkörper (51) zu drücken, wodurch das Verbindergehäuse (3) im Schalenraum (516) positioniert wird.

4. Lichtwellenleiter-Verbinderanordnung (2) nach Anspruch 3, ferner **dadurch gekennzeichnet, dass**:
die Basiswand (31) und die Seitenwände (32) des Verbindergehäuses (3) einstückig ausgebildet sind, wobei jede der Seitenwände (32) einen Wandkörper (321), einen äußeren Vorsprung (324), der vom Wandkörper (321) nach außen vorsteht, und mehrere Durchgangslöcher (322), die im Wandkörper (321) ausgebildet sind, aufweist;
der Deckel (33) mit mehreren Zungen (331) ausgebildet ist, die sich in die Durchgangslöcher (322) in den jeweiligen Wandkörpern (321) der Seitenwände (32) erstrecken und mit diesen in Eingriff stehen;
der Schalenkörper (51) der Außenschale (5) ferner zwei abgestufte Schultern (517) aufweist, die in der inneren umgebenden Oberfläche (511) ausgebildet sind; und
das Positionierungselement (52) zwei der elastischen Schenkel (524) aufweist, wobei die elastischen Schenkel (524) die äußeren Vorsprünge (324) der Seitenwände (32) elastisch zum Anliegen gegen die jeweiligen abgestuften Schultern (517) drücken, um dadurch das Verbindergehäuse (3) im Mantelraum (516) zu positionieren.

5. Lichtwellenleiter-Verbinderanordnung (2) nach einem der Ansprüche 1 bis 4, **gekennzeichnet durch** eine Staubverhinderungseinheit (6), umfassend
ein Kappenelement (61), das lösbar mit dem Schalenkörper (51) der Außenschale (5) in Eingriff steht, zum Abdecken der zweiten Endöffnung (514), und
einen elastischen Dichtungsring (62), der auf das Kappenelement (61) geschoben ist und dichtend gegen das Kappenelement (61) und die Innenfläche (511) des Schalenkörpers (51) anliegt.

6. Lichtwellenleiter-Verbinderanordnung (2) nach Anspruch 5, ferner **dadurch gekennzeichnet, dass** die Staubverhinderungseinheit (6) ferner ein Kappenverbindungselement (63) umfasst, das entfernbar auf den Schalenkörper (51) geschoben ist und die Außenschale (51) und das Kappenelement (61) miteinander verbindet.

7. Lichtwellenleiter-Verbinderanordnung (2) nach Anspruch 4, ferner **dadurch gekennzeichnet, dass**:
jede der Seitenwände (32) ferner ein Paar von Begrenzungsstangen (323) aufweist, die vom Wandkörper (321) und in den Innenraum (34) vorstehen, die sich in der zweiten Richtung (Y) erstrecken, und die in der dritten Richtung (Z) voneinander beabstandet sind; und
jedes der ersten und zweiten Halteelemente (41, 42) eine Gegenplatte (411, 421) und einen rohrförmigen Teil (412, 422) aufweist, der sich von der Gegenplatte (411, 412) weg und von dem anderen der ersten und zweiten Halteelemente (41, 42) in der dritten Richtung (Z) erstreckt, wobei die Gegenplatten (411, 421) zusammenpassen und sich gegenseitig berühren und durch die Begrenzungsstangen (323) der Seitenwände (32) auf solche Weise begrenzt sind, dass die ersten und zweiten Halteelemente (41, 42) im Wesentlichen daran gehindert werden, sich im Verbindergehäuse (3) in der dritten Richtung (Z) zu bewegen, wobei sich die Kupplungshülse (43) in die rohrförmigen Teile (412, 422) der ersten und zweiten Halteelemente (41, 42) erstreckt.

## Revendications

1. Ensemble de connecteur de fibres optiques (2) comprenant :
un boîtier de connecteur (3) ayant :
deux parois latérales (32) qui sont opposées entre elles dans une première direction (X),
une paroi de base (31) qui est disposée entre et qui interconnecte lesdites parois latérales (32), et
un couvercle (33) qui est disposé à l'opposé de ladite paroi de base (31) dans une deuxième direction (Y) transversale par rapport à la première direction (X), et qui est disposé entre et met mutuellement en prise, de manière amovible, lesdites parois latérales (32), ladite paroi de base (31) et lesdites parois latérales (32) définissant, par coopération, un espace interne (34) et une ouverture d'accès (341) qui est en communication spatiale avec ledit espace interne (34) et qui est recouvert et fermé par ledit couvercle (33) ;
une unité de positionnement (4) comprenant :
des premier et second éléments de maintien (41, 42), et
un manchon de couplage (43) qui s'étend dans et interconnecte lesdits premier et second éléments de maintien (41, 42), ladite unité de positionnement (4) étant insérée dans ledit espace interne (34) à travers ladite ouverture d'accès (341) afin d'être montée dans ledit espace interne (34) avant de recouvrir ladite ouverture d'accès (341) avec ledit couvercle (33) ;
une coque externe (5) ayant :
un corps de coque creux (51) qui a une surface périphérique interne (511) définissant un espace de coque (516) à l'intérieur de cette dernière, une surface périphérique externe (512) opposée à ladite surface périphérique interne (511), et des première et seconde ouvertures d'extrémité (513, 514) opposées entre elles dans une troisième direction (Z) transversale par rapport aux première et deuxième directions (X, Y) et en communication spatiale avec ledit espace de coque (516), ledit boîtier de connecteur (3) étant reçu dans ledit espace de coque (516), et
une bride externe (518) qui s'étend vers l'extérieur à partir de ladite surface périphérique externe (512) dudit corps de coque (51) ;
un élément de positionnement (52) disposé de manière adjacente à ladite première ouverture d'extrémité (513), et mettant en prise, de manière amovible, ladite coque externe (5) ; et
une unité de fixation (7) comprenant une bague élastique (72) et une bague de positionnement (71),
ladite bague élastique (72) étant disposée entre ladite bague de positionnement (71) et ladite bride externe (518) de ladite coque externe (51), et qui est comprimée par ladite bague de positionnement (71) contre ladite bride externe (518),
l'ensemble de connecteur de fibres optiques (2) étant **caractérisé en ce que** :
ladite surface périphérique externe (512) est formée avec un premier filet externe (519) et un second vissage externe (510) qui sont disposés sur des côtés opposés de ladite bride externe (518) dans la troisième direction (Z), et
ladite bague de positionnement (71) peut mettre en prise, par filet, l'un parmi ledit premier filet externe (519) et ledit second filet externe (510) de ladite coque externe (5).

2. Ensemble de connecteur de fibres optiques (2) selon la revendication 1, **caractérisé en ce que** ledit premier filet externe (519) est disposé entre ladite première ouverture d'extrémité (513) et ladite bride externe (518), et ledit second filet externe (510) est disposé entre ladite seconde ouverture d'extrémité (514) et ladite bride externe (518).

3. Ensemble de connecteur de fibres optiques (2) selon l'une quelconque des revendications 1 et 2, **caractérisé en ce que** ledit élément de positionnement (52) a :
une partie en forme de boucle (521) qui définit une ouverture d'entrée (522) et qui est emmanchée avec ajustement sur ledit boîtier de connecteur (3),
une pluralité de bras résilients (523) qui s'étendent à partir de ladite partie en forme de boucle (521) dans la troisième direction (Z) dans ledit espace de coque (516), et qui mettent en prise, de manière amovible et résiliente, ledit corps de coque (51) de ladite coque externe (5), et
une pluralité de pattes résilientes (524) qui s'étendent à partir de ladite partie en forme de boucle (521) dans la troisième direction (Z) pour pousser, de manière résiliente, ledit boîtier de connecteur (3) pour venir en butée contre ledit corps de coque (51), positionnant ainsi ledit boîtier de connecteur (3) dans ledit espace de coque (516).

4. Ensemble de connecteur de fibres optiques (2) selon la revendication 3, **caractérisé en outre en ce que** :
ladite paroi de base (31) et lesdites parois latérales (32) dudit boîtier de connecteur (3) sont formées d'un seul tenant, chacune desdites parois latérales (32) ayant un corps de paroi (321), une saillie externe (324) faisant saillie vers l'extérieur à partir dudit corps de paroi (321), et une pluralité de trous débouchants (322) formés dans ledit corps de paroi (321) ;
ledit couvercle (33) est formé avec une pluralité de languettes (331) qui s'étendent dans et s'engagent dans lesdits trous débouchants (322) dans lesdits corps de paroi (321) desdites parois latérales (32), respectivement ;
ledit corps de coque (51) de ladite coque externe (5) a en outre deux épaulements étagés (517) qui sont formés dans ladite surface périphérique interne (511) ; et
ledit élément de positionnement (52) a deux desdites pattes résilientes (524), lesdites pattes résilientes (524) poussant, de manière résiliente, lesdites saillies externes (324) desdites parois latérales (32) pour venir en butée contre lesdits épaulements étagés (517), respectivement, pour positionner ainsi ledit boîtier de connecteur (3) dans ledit espace de coque (516).

5. Ensemble de connecteur de fibres optiques (2) selon l'une quelconque des revendications 1 à 4, **caractérisé par** une unité anti-poussière (6) comprenant :
un élément formant capuchon (61) qui est en prise, de manière amovible, avec ledit corps de coque (51) de ladite coque externe (5) pour recouvrir ladite seconde ouverture d'extrémité (514), et
une bague d'étanchéité élastique (62) qui est emmanchée sur ledit élément formant capuchon (61) et qui vient en butée de manière étanche contre ledit élément formant capuchon (61) et ladite surface interne (511) dudit corps de coque (51).

6. Ensemble de connecteur de fibres optiques (2) selon la revendication 5, **caractérisé en outre en ce que** ladite unité anti-poussière (6) comprend en outre un élément de raccordement de capuchon (63) emmanché de manière amovible sur ledit corps de coque (51) et interconnectant ladite coque externe (51) et ledit élément formant capuchon (61).

7. Ensemble de connecteur de fibres optiques (2) selon la revendication 4, **caractérisé en outre en ce que** :
chacune desdites parois latérales (32) a en outre une paire de barres de limitation (323) qui font saillie dudit corps de paroi (321) et dans ledit espace interne (34), qui s'étendent dans la deuxième direction (Y), et qui sont espacées l'une de l'autre dans la troisième direction (Z) ; et
chacun desdits premier et second éléments de maintien (41, 42) a une plaque de couplage (411, 421) et une partie tubulaire (412, 422) s'étendant à partir de ladite plaque de couplage (411, 412) et à distance de l'autre parmi lesdits premier et second éléments de maintien (41, 42) dans la troisième direction (Z), lesdites plaques de couplage (411, 421) se couplant avec et étant en contact entre elles, et étant limitées par lesdites barres de limitation (323) desdites parois latérales (32), de sorte que lesdits premier et second éléments de maintien (41, 42) ne peuvent sensiblement pas se déplacer dans ledit boîtier de connecteur (3) dans la troisième direction (Z), ledit manchon de couplage (43) s'étendant dans lesdites parties tubulaires (412, 422) desdits premier et second éléments de maintien (41, 42).
